# EUROPÄISCHE PATENTSCHRIFT

(11) **EP 2 954 138 B1**
(45) Veröffentlichungstag und Bekanntmachung des Hinweises auf die Patenterteilung: **23.05.2018**
(21) Anmeldenummer: 13828903.8
(22) Anmeldetag: 23.12.2013
(51) Int. Cl.: E05D 11/10, E05F 1/10

(54) **STELLANTRIEB ZUM BEWEGEN EINES BEWEGBAREN MÖBELTEILES**
ACUTATING DRIVE FOR MOVING A MOVEABLE FURNITURE PART
MÉCANISME DE COMMANDE PERMETTANT DE DÉPLACER UNE PARTIE MOBILE D'UN MEUBLE

(30) Priorität: 08.02.2013 AT 1032013
(43) Veröffentlichungstag der Anmeldung: 16.12.2015
(73) Patentinhaber: Julius Blum GmbH, 6973 Höchst (AT)
(72) Erfinder: BALDREICH, Armin, A-6923 Lauterach (AT); HÄMMERLE, Kurt, A-6890 Lustenau (AT)
(74) Vertreter: Torggler & Hofinger Patentanwälte
(86) Internationale Anmeldenummer: PCT/AT2013/000214
(87) Internationale Veröffentlichungsnummer: WO 2014/121309

(56) Entgegenhaltungen:
- EP-A2- 1 148 200
- WO-A1-2012/112997
- US-A- 2 035 823

## Beschreibung

Die vorliegende Erfindung bezieht sich auf einen Stellantrieb zum Bewegen eines bewegbaren Möbelteiles, umfassend:
- zumindest ein bewegbar gelagertes Stellglied zum Bewegen des bewegbaren Möbelteiles,
- eine Federvorrichtung zur Kraftbeaufschlagung des Stellgliedes,
- eine Einstellvorrichtung, durch welche eine auf das Stellglied wirkende Kraft der Federvorrichtung einstellbar ist,
- wobei die Einstellvorrichtung eine ein Gewinde aufweisende Einstellschraube aufweist, wobei die auf das Stellglied wirkende Kraft der Federvorrichtung über eine Schraubenmutter, welche entlang des Gewindes verstellbar gelagert ist, einstellbar ist.

Im Weiteren betrifft die Erfindung ein Möbel mit einem Möbelkorpus und einer relativ zum Möbelkorpus bewegbaren Klappe, wobei die Klappe durch einen Stellantrieb der zu beschreibenden Art bewegbar gelagert ist. Ein Stellantrieb gemäß dem Oberbegriff von Anspruch 1 ist aus US2035823 bekannt. Ein Stellantrieb in Form einer so genannten Klappenstütze ist beispielsweise in der DE 100 19 337 A1 beschrieben. Diese Klappenstütze umfasst zwei gelenkig miteinander verbundene Armteile, wobei ein klappenseitiger Armteil durch die Kraft einer Druckfeder in Öffnungsrichtung beaufschlagt ist. Zur Einstellung der auf die Klappe ausgeübten Kraft ist eine Einstellvorrichtung vorgesehen, welche einen Gewindebolzen und eine mit dem Gewindebolzen in Gewindeeingriff stehende Gewindemutter umfasst.

Bei Einstellvorrichtungen mit einer Einstellschraube und einer daran gelagerten Schraubenmutter tritt häufig das Problem auf, dass sich bei einer Verdrehung der Einstellschraube die Schraubenmutter bei Erreichen einer Endstellung mit dem Schraubenkopf (d.h. mit der unter dem Schraubenkopf gebildeten Ringfläche) verklemmt. Tritt eine solche Verklemmung zwischen Schraubenmutter und Schraubenkopf einmal auf, so ist diese nur mit einem erhöhten manuellen Kraftaufwand wieder zu lösen. Wenn die Schraubenmutter zudem als Widerlager für die Federvorrichtung dient, so muss für ein Lösen dieser gebildeten Verklemmung zudem die Kraft der Federvorrichtung überwunden werden. Wenn hingegen die Schraubenmutter an den freien Endbereich der Einstellschraube bewegt wird, so wäre es möglich, dass der Gewindeeingriff zwischen Schraubenmutter und Einstellschraube aufgehoben wird. Die Funktionalität der Einstellvorrichtung wäre daher nicht mehr gewährleistet.

Aufgabe der vorliegenden Erfindung ist es daher, einen Stellantrieb der eingangs erwähnten Gattung unter Vermeidung obiger Nachteile anzugeben.

Dies wird erfindungsgemäß durch die Merkmale des Patentanspruchs 1 gelöst. Weitere vorteilhafte Ausgestaltungen der Erfindung sind in den abhängigen Unteransprüchen angegeben.

Gemäß der Erfindung ist also vorgesehen, dass zumindest ein Federelement vorgesehen ist, über das die Schraubenmutter an zumindest einem Endbereich der Einstellschraube mit einer von diesem Endbereich wegweisenden Kraft beaufschlagbar ist.

Mit anderen Worten ist wenigstens ein von der Federvorrichtung gesondertes Federelement vorgesehen, welches die Schraubenmutter bei Erreichen eines Endbereiches der Einstellschraube in Richtung des gegenüberliegenden Endbereiches der Einstellschraube drückt. Damit kann einerseits ein Verklemmen der Schraubenmutter mit dem Schraubenkopf wirkungsvoll verhindert werden, andererseits kann - falls erforderlich - ein Federelement auch dazu vorgesehen werden, an einem freien Ende der Einstellschraube ein Ablösen der Schraubenmutter vom Gewinde zu verhindern.

Zur Bereitstellung eines Widerlagers für das Federelement kann an zumindest einem Endbereich der Einstellschraube eine Anschlagfläche angeordnet sein, an der das Federelement abstützbar ist. Diese Anschlagfläche kann von einem Schraubenkopf (insbesondere von der unter dem Schraubenkopf gebildeten Ringfläche) der Einstellschraube gebildet sein.

Gemäß einem Ausführungsbeispiel ist das Federelement als ein von der Schraubenmutter gesondertes Bauteil ausgebildet. Das Federelement kann dabei als Schraubenfeder oder alternativ als, vorzugsweise bogenförmig vorgespannte, Blattfeder ausgebildet sein. Auch ist es möglich, dass das Federelement mit dem Schraubenkopf verbunden oder mit diesem einstückig (beispielsweise als Kunststoff-Spritzgussteil) ausgeführt ist.

Die Federvorrichtung zum Beaufschlagen des Stellgliedes kann - vorzugsweise direkt - an der Schraubenmutter anliegen, es ist aber auch möglich, dass die Federvorrichtung indirekt (beispielsweise über zumindest einen Zwischenhebel oder dergleichen) auf die Schraubenmutter einwirkt.

Gemäß einer möglichen Ausführungsform ist das Stellglied als ein um eine Drehachse schwenkbar gelagerter Stellarm ausgebildet. Es ist aber auch möglich, das das Stellglied linear verschiebbar gelagert ist, beispielsweise in Form einer Kolbenstange, welche relativ zu einem die Federvorrichtung aufnehmenden Gehäuse verschiebbar gelagert ist.

Weitere Einzelheiten und Vorteile der vorliegenden Erfindung ergeben sich anhand des in den Figuren gezeigten Ausführungsbeispiels. Dabei zeigt bzw. zeigen:
- Fig. 1a, 1b: ein Möbel mit einer hochbewegbaren Klappe in einer Schließstellung und in einer Offenstellung,
- Fig. 2: einen Querschnitt eines Stellantriebes mit maximaler Federvorspannung,
- Fig. 3: einen Querschnitt eines Stellantriebes mit minimaler Federvorspannung,
- Fig. 4: der Stellantrieb in einer Explosionsdarstellung,
- Fig. 5a-5c: der Stellantrieb sowie zwei verschiedene Detaildarstellungen in perspektivischen Ansichten.

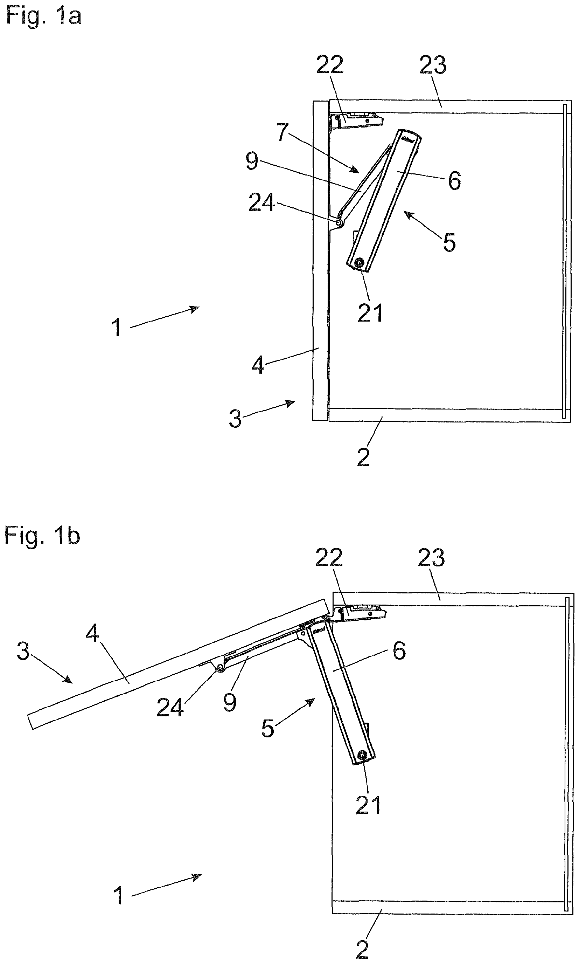

Fig. 1a zeigt eine perspektivische Ansicht eines Möbels 1 mit einem Möbelkorpus 2 und mit einem bewegbaren Möbelteil 3 in Form einer Klappe 4, welche relativ zum Möbelkorpus 2 hochbewegbar gelagert ist. Fig. 1b zeigt das Möbel 1 mit der Klappe 4 in einer Offenstellung, wobei die Klappe 4 über Scharniere 22 gegenüber einem Schrankdeckel 23 des Möbelkorpus 2 schwenkbar gelagert ist. Zum Bewegen der Klappe 4 ist ein Stellantrieb 5 mit einem Gehäuse 6 vorgesehen, welches relativ zum Möbelkorpus 2 an einer Lagerachse 21 schwenkbar abgestützt ist. Ferner umfasst der Stellantrieb 5 ein bewegbar gelagertes Stellglied 7, welches im gezeigten Ausführungsbeispiel als Stellarm 9 ausgebildet ist, der in Montagelage um eine horizontal verlaufende Drehachse schwenkbar gelagert ist. Durch den Stellantrieb 5 ist die Klappe 4 zwischen einer vertikalen Schließstellung (Fig. 1a) und einer hochgeschwenkten, den Zugang zum Möbelkorpus 2 freigebenden Offenstellung (Fig.1b) bewegbar gelagert. Der schwenkbar gelagerte Stellarm 9 ist mit der Klappe 4 über eine Achse 24 verbunden.

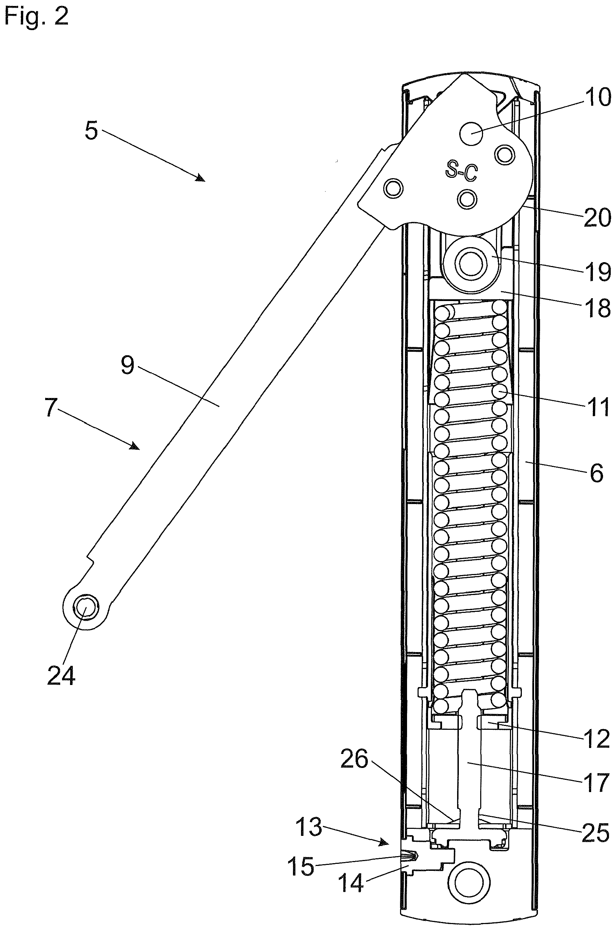

Fig. 2 zeigt den Stellantrieb 5 in einem Querschnitt, wobei das Stellglied 7 in Form des Stellarmes 9 um eine in Montagelage horizontal verlaufende Drehachse 10 schwenkbar gelagert ist. Das freie Ende des Stellarmes 9 ist über die Achse 24 gelenkig mit der Klappe 4 zu verbinden. Der Stellantrieb 5 umfasst ein am Möbelkorpus 2 zu befestigendes Gehäuse 6, in dem eine Federvorrichtung 11 aufgenommen ist. Im gezeigten Ausführungsbeispiel umfasst die Federvorrichtung 11 zumindest eine als Schraubenfeder ausgebildete Druckfeder, es können aber auch zwei oder mehrere - vorzugsweise parallel geschaltete - Schraubenfedern vorgesehen werden. Die Federvorrichtung 11 stützt sich mit einem Ende an einem Widerlager in Form einer Schraubenmutter 12 ab, das andere Ende der Federvorrichtung 11 liegt an einem Schieber 18 an, welcher relativ zum Gehäuse 6 verschiebbar gelagert ist. Die Schraubenmutter 12 ist entlang eines Gewindes 17 einer Einstellschraube 16 bewegbar gelagert. Am Schieber 18 ist eine Druckrolle 19 drehbar gelagert, wobei der Stellarm 9 über eine Steuerkurve 20, an welcher eine von der Federvorrichtung 11 belastete Druckrolle 19 abläuft, verschwenkbar ist. Die Steuerkurve 20 ist in der gezeigten Figur am Stellarm 9 angeordnet oder ausgebildet, wobei die Steuerkurve 20 einen unterschiedlich radialen Abstand zur Drehachse 10 des Stellarmes 9 ausbildet. Die Steuerkurve 20 ist so ausgelegt, dass der Stellarm 9 gegen Ende der Schließbewegung in die vollständige Schließstellung gedrückt wird. Bei der Öffnungsbewegung des Stellarmes 9 gelangt die Druckrolle 19 auf einen Scheitelpunkt der Steuerkurve 20, wobei der Stellarm 9 durch die Kraft der Federvorrichtung 11 in Richtung Offenstellung gedrückt wird. Zur Dämpfung der Schließ- und/oder Öffnungsbewegung kann auch ein (hier nicht gezeigter) Dämpfer, insbesondere ein Fluiddämpfer, vorgesehen werden. Durch eine Einstellvorrichtung 13 ist die auf den Stellarm 9 wirkende Kraft der Federvorrichtung 11 einstellbar. Die Einstellvorrichtung 13 umfasst ein Verstellrad 14 mit einer Aufnahme 15 für ein Werkzeug, wobei das Verstellrad 14 über ein Getriebe, vorzugsweise ein Kegelradgetriebe, mit dem Kopf der Einstellschraube 16 zusammenwirkt. Durch eine durch ein Werkzeug herbeigeführte Drehbewegung des Verstellrades 14 ist die Einstellschraube 16 verdrehbar, wobei sich die Schraubenmutter 12 entlang des Gewindes 17 bewegt. Alternativ kann das Verstellrad 14 auch zur Handbetätigung ausgebildet sein. In der gezeigten Figur befindet sich die Schraubenmutter 12 in einer Position, in welcher die Federvorrichtung 11 maximal vorgespannt ist, d.h. dass die auf den Stellarm 9 wirkende Federkraft am höchsten ist. Erkennbar ist ein Federelement 26, über das die Schraubenmutter 12 an zumindest einem Endbereich der Einstellschraube 16 mit einer von diesem Endbereich wegweisenden Kraft beaufschlagbar ist. Im gezeigten Ausführungsbeispiel ist das Federelement 26 als bogenförmig vorgespannte Blattfeder ausgebildet, welche die Schraubenmutter 12 - wenn sich diese benachbart zur Unterseite des Kopfes der Einstellschraube 16 befindet - mit einer in Längsrichtung der Einstellschraube 16 wirkenden Kraft vom Kopf der Einstellschraube 16 wegdrückt. Die Einstellschraube 16 weist zudem einen gewindelosen Abschnitt 25 auf, dessen Funktion in der nachfolgenden Figur erläutert wird.

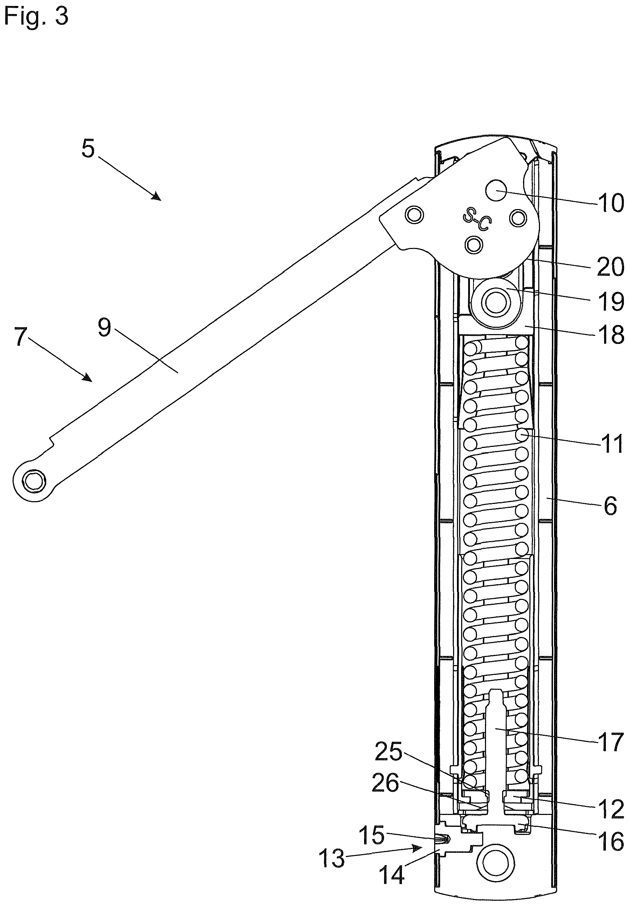

Fig. 3 zeigt den Stellantrieb 5 gemäß Fig. 2, wobei sich allerdings die Schraubenmutter 12 in einer Position befindet, in welcher die Federvorrichtung 11 am wenigsten vorgespannt ist, d.h. dass die auf den Stellarm 9 wirkende Federkraft am geringsten ist. Um bei der Einstellung der Kraft der Federvorrichtung 11 ein Verklemmen zwischen der Schraubenmutter 12 und dem Kopf der Einstellschraube 16 zu verhindern, ist die Einstellschraube 16 mit einem gewindelosen Abschnitt 25 versehen, durch welchen die Schraubenmutter 12 aus dem Gewinde 17 der Einstellschraube 16 ausfahren kann. Der Gewindeeingriff zwischen Schraubenmutter 12 und Gewinde 17 ist dadurch aufhebbar, die Einstellschraube 16 dreht sich bei einer Verdrehung des Verstellrades 14 leer durch. Dies hat den Vorteil, dass sich die Schraubenmutter 12 bei der minimalen Einstellung der Federkraft nicht mit dem Kopf der Einstellschraube 16 verklemmen kann. Überdies macht sich diese Endstellung für einen Benutzer mit einem Klickgeräusch akustisch bemerkbar. Damit die Schraubenmutter 12 bei Verdrehung des Verstellrades 14 in Gegenrichtung wieder in das Gewinde 17 der Einstellschraube 16 findet, ist zwischen der Schraubenmutter 12 und der Unterseite des Kopfes der Einstellschraube 16 ein Federelement 26 wirksam, welches die Schraubenmutter 12 nach oben drückt und die Schraubenmutter 12 wieder in das Gewinde 17 der Einstellschraube 16 formschlüssig eingreifen kann. Die Kraft des Federelementes 26 ist dabei so zu dimensionieren, dass diese die von der Federvorrichtung 11 wirkende Kraft auf die Schraubenmutter 12 überwinden kann. Auf diese Weise wird die Schraubenmutter 12 durch die Kraft des Federelementes 26 und entgegen der Kraft der Federvorrichtung 11 mit einer ausreichend großen Haltekraft gegen das Gewinde 17 der Einstellschraube 16 angedrückt.

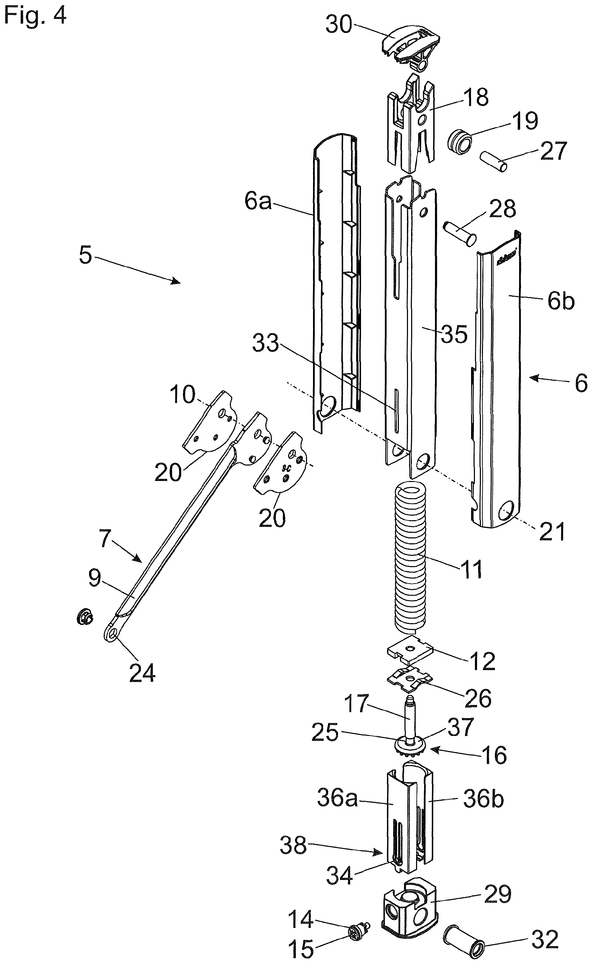

Fig. 4 zeigt eine Explosionsdarstellung des Stellantriebes 5. Das Stellglied 7 in Form des schwenkbaren Stellarmes 9 ist einerseits an einer Achse 24 mit der Klappe 4 zu verbinden, andererseits ist der Stellarm 9 korpusseitig um die Drehachse 10 (Gelenkbolzen 28) schwenkbar gelagert. Am Stellarm 9 werden beidseitig Teile, welche die Steuerkurve 20 ausbilden, befestigt. In Montagelage kann eine Druckrolle 19, welche drehbar an einem Gelenkbolzen 27 gelagert ist, an der Steuerkurve 20 des Stellarmes 9 ablaufen. Die Druckrolle 19 ist an einem von der Federvorrichtung 11 belasteten Schieber 18 angeordnet, welcher innerhalb eines rohrförmigen Abschnitts 35 linear verschiebbar gelagert ist. Die Federvorrichtung 11 stützt sich an einer Schraubenmutter 12 ab, welche an einem Gewinde 17 der Einstellschraube 16 verstellbar gelagert ist. Die Einstellschraube 16 weist eine Anschlagfläche 37 auf, an der zumindest ein Federelement 26 abstützbar ist. Das Federelement 26 ist im gezeigten Ausführungsbeispiel als bogenförmig vorgespannte Blattfeder ausgebildet. Zwischen dem Gewinde 17 und der Anschlagfläche 37 ist ein gewindeloser Abschnitt 25 ausgebildet, welchen einen direkten Kontakt der Schraubenmutter 12 mit der Anschlagfläche 16 der Einstellschraube 16 verhindert. Durch Ansetzen und Verdrehen eines Werkzeuges an der Aufnahme 15 eines Verstellrades 14 ist die Einstellschraube 16 verdrehbar. Über ein Lagerteil 29 und einen Haltebolzen 32 ist ein Gehäuse 6, welches die beiden Gehäuseteile 6a und 6b umfasst, zu befestigen. Den oberen Abschluss bildet eine Abdeckkappe 30, welche auf den die Drehachse 10 bildenden

Gelenkbolzen 28 aufschnappbar ist. Als Besonderheit ist noch eine Anzeigevorrichtung 38 zu nennen, durch welche die auf den Stellarm 9 wirkende Kraft der Federvorrichtung 11 anzeigbar ist. Diese Anzeigevorrichtung 38 umfasst Führungsteile 36a und 36b, welche mit der Schraubenmutter 12 bewegungsgekoppelt sind. An zumindest einem Führungsteil 36a ist ein Vorsprung 34 ausgebildet, der in ein Langloch 33 des rohrförmigen Abschnitts 35 eingreift. Bei einer Verstellung der Einstellschraube 16 wird also auch der Vorsprung 34 des Führungsteiles 36a mitbewegt, wobei sich die Stellung des Vorsprungs 34 relativ zum Langloch 33 des rohrförmigen Abschnittes 35 verändert. Die Relativposition zwischen Vorsprung 34 und Langloch 33 ist ein für eine Person erkennbares Maß für die jeweils eingestellte Kraft der Federvorrichtung 11. Ergänzend kann der rohrförmige Abschnitt 35 auch mit einer Skala versehen werden, durch die eine Person den jeweiligen Wert der Federvorspannung ablesen kann.

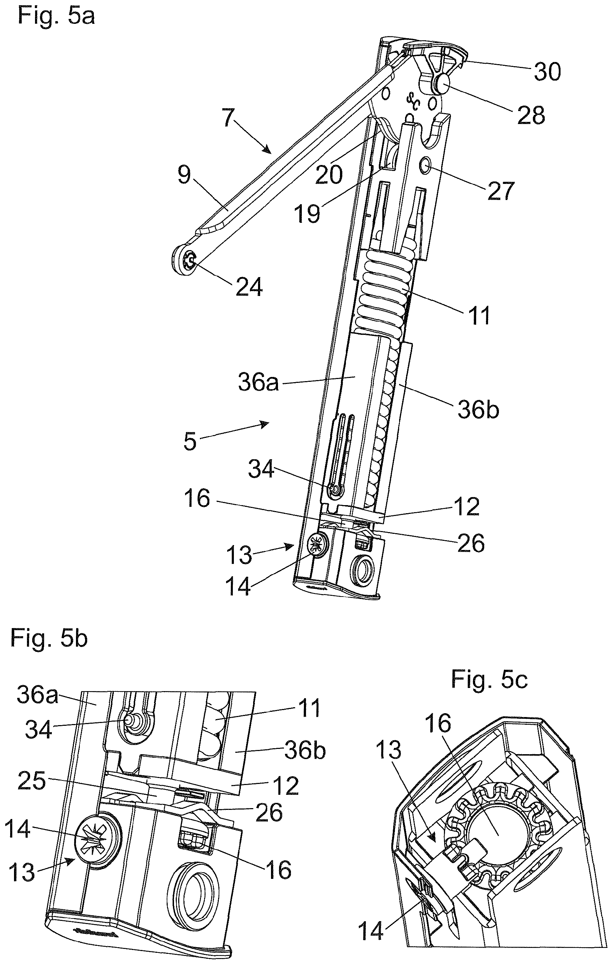

Fig. 5a zeigt den Stellantrieb 5 in einer perspektivischen Ansicht, wobei aus Gründen der Übersichtlichkeit der in Fig. 4 gezeigte rohrförmige Abschnitt 35 (in dem der verfahrbare Schieber 18 aufgenommen ist) sowie das Gehäuse 6 mit den beiden Gehäuseteilen 6a und 6b nicht dargestellt sind. Die Druckrolle 19 liegt durch die Kraft der Federvorrichtung 11 an der Steuerkurve 20 des Stellarmes 9 an, wobei durch die Einstellvorrichtung 13 die auf den Stellarm 9 wirkende Federkraft einstellbar ist. Die Führungsteile 36a und 36b mit den Vorsprüngen 34 sind mit der Schraubenmutter 12 formschlüssig verbunden. Gut erkennbar ist auch das Federelement 26, welches zwischen dem Kopf der Einstellschraube 16 und der Schraubenmutter 12 wirksam ist.

Fig. 5b zeigt den unteren Bereich des Stellantriebes 5 in einer vergrößerten Ansicht. Durch eine Verdrehung des Verstellrades 14 kann die Einstellschraube 16 und damit die Position der Schraubenmutter 12 verstellt werden.

Fig. 5c zeigt den Stellantrieb 5 in einer Ansicht von unten, wobei das Verstellrad 14 über zusammenwirkende Verzahnungen mit der Einstellschraube 16 in Verbindung steht. Das Verstellrad 14 ist um eine Drehachse verdrehbar gelagert, wobei die Richtung der Drehachse des Verstellrades 14 relativ zu einer Längsachse der Einstellschraube 16 quer, vorzugsweise etwa rechtwinklig, verläuft. Diese Kraftumlenkung hat den Vorteil, dass ein Schraubendreher zum Verstellen des

Verstellrades 14 seitlich, d.h. in Montagelage etwa senkrecht zu einer Seitenwand des Möbelkorpus 2 angesetzt und verdreht werden kann, wobei eine besonders komfortable, einfach zugängliche und kräftemäßig leichte Einstellung der Vorspannkraft der Federvorrichtung 11 möglich ist.

## Patentansprüche

1. Stellantrieb (5) zum Bewegen eines bewegbaren Möbelteiles (3), umfassend:
- zumindest ein bewegbar gelagertes Stellglied (7) zum Bewegen des bewegbaren Möbelteiles (3),
- eine Federvorrichtung (11) zur Kraftbeaufschlagung des Stellgliedes (7),
- eine Einstellvorrichtung (13), durch welche eine auf das Stellglied (7) wirkende Kraft der Federvorrichtung (11) einstellbar ist,
- wobei die Einstellvorrichtung (13) eine ein Gewinde (17) aufweisende Einstellschraube (16) aufweist, wobei die auf das Stellglied (7) wirkende Kraft der Federvorrichtung (11) über eine Schraubenmutter (12), welche entlang des Gewindes (17) verstellbar gelagert ist, einstellbar ist,
**dadurch gekennzeichnet, dass** zumindest ein von der Federvorrichtung (11) gesondertes Federelement (26) vorgesehen ist, über das die Schraubenmutter (12) an zumindest einem Endbereich der Einstellschraube (16) mit einer von diesem Endbereich wegweisenden Kraft beaufschlagbar ist und dass an zumindest einem Endbereich der Einstellschraube (16) eine Anschlagfläche (37) angeordnet ist, an der das Federelement (26) abstützbar ist.

2. Stellantrieb nach Anspruch 1, **dadurch gekennzeichnet, dass** die Anschlagfläche (37) von einem Schraubenkopf der Einstellschraube (16) gebildet ist.

3. Stellantrieb nach Anspruch 1 oder 2, **dadurch gekennzeichnet, dass** das Federelement (26) als ein von der Schraubenmutter (12) gesondertes Bauteil ausgebildet ist.

4. Stellantrieb nach einem der Ansprüche 1 bis 3, **dadurch gekennzeichnet, dass** die Einstellschraube (16) an zumindest einem Endbereich einen gewindelosen Abschnitt (25) aufweist, wobei die Schraubenmutter (12) in diesen gewindelosen Abschnitt (25) eintreten und vom Gewinde (17) der Einstellschraube (16) außer Eingriff bringbar ist.

5. Stellantrieb nach einem der Ansprüche 1 bis 4, **dadurch gekennzeichnet, dass** das Federelement (26) als, vorzugsweise bogenförmig vorgespannte, Blattfeder ausgebildet ist.

6. Stellantrieb nach einem der Ansprüche 1 bis 5, **dadurch gekennzeichnet, dass** die Federvorrichtung (11) zum Beaufschlagen des Stellgliedes (7) an der Schraubenmutter (12) anliegt.

7. Stellantrieb nach einem der Ansprüche 1 bis 6, **dadurch gekennzeichnet, dass** die Federvorrichtung (11) zum Beaufschlagen des Stellgliedes (7) zumindest eine Schraubenfeder aufweist.

8. Stellantrieb nach einem der Ansprüche 1 bis 7, **dadurch gekennzeichnet, dass** das Stellglied (7) als ein um eine Drehachse (10) schwenkbar gelagerter Stellarm (9) ausgebildet ist.

9. Stellantrieb nach Anspruch 8, **dadurch gekennzeichnet, dass** der Stellarm (9) über eine Steuerkurve (20), an welcher eine von der Federvorrichtung (11) belastete Druckrolle (19) abläuft, verschwenkbar ist.

10. Stellantrieb nach Anspruch 9, **dadurch gekennzeichnet, dass** die Steuerkurve (20) am Stellarm (9) angeordnet oder ausgebildet ist, wobei die Steuerkurve (20) einen unterschiedlich radialen Abstand zur Drehachse (10) des Stellarmes (9) ausbildet.

11. Stellantrieb nach einem der Ansprüche 1 bis 10, **dadurch gekennzeichnet, dass** ein Verstellrad (14) mit einer Aufnahme (15) für ein Werkzeug vorgesehen ist, welches über ein Getriebe mit der Einstellschraube (16) zusammenwirkt, wobei durch eine durch das Werkzeug herbeigeführte Drehbewegung des Verstellrades (14) die Einstellschraube (16) verdrehbar ist.

12. Stellantrieb nach Anspruch 11, **dadurch gekennzeichnet, dass** das Verstellrad (14) um eine Drehachse verdrehbar gelagert ist, wobei die Richtung der Drehachse des Verstellrades (14) relativ zu einer Längsachse der Einstellschraube (16) quer, vorzugsweise etwa rechtwinklig, verläuft.

13. Stellantrieb nach einem der Ansprüche 1 bis 12, **dadurch gekennzeichnet, dass** der Stellantrieb (5) ein an einem Möbelkorpus (2) zu befestigendes Gehäuse (6) aufweist, wobei das Stellglied (7) in Gebrauchlage einerseits schwenkbar am Möbelkorpus (2) und andererseits mit dem bewegbaren Möbelteil (3) verbunden ist.

14. Möbel (1) mit einem Möbelkorpus (2) und einer relativ zum Möbelkorpus (2) bewegbaren Klappe (4), wobei die Klappe (4) durch einen Stellantrieb (5) nach einem der Ansprüche 1 bis 13 bewegbar gelagert ist.

## Claims

1. An actuating drive (5) for moving a movable furniture part (3), including:
- at least one movably-mounted actuating member (7) for moving the movable furniture part (3),
- a spring device (11) for applying a force to the actuating member (7),
- an adjusting device (13) by which a force of the spring device (11) acting on the actuating member (7) can be adjusted,
- wherein the adjusting device (13) includes an adjusting screw (16) with a thread portion (17), wherein the force of the spring device (11) acting on the actuating member (7) can be adjusted by a screw nut (12) displaceably arranged along the thread portion (17),
**characterized in that** a spring element (26) separate from the spring device (11) is provided by which the screw nut (12), on at least one end region of the adjusting screw (16), can be acted upon by a force in a direction facing away from that end portion, and that on at least one end portion of the adjusting screw (16), an abutment surface (37) is arranged on which the spring element (26) can be supported.

2. The actuating drive according to claim 1, **characterized in that** the abutment surface (37) is formed by a screw head of the adjusting screw (16).

3. The actuating drive according to claim 1 or 2, **characterized in that** the spring element (26) is configured as a component separate from the screw nut (12).

4. The actuating drive according to one of the claims 1 to 3, **characterized in that** the adjusting screw (16), on at least one end portion, has a threadless portion (25), wherein the screw nut (12) enters into the threadless portion (25) and can be disengaged from the thread portion (17) of the adjusting screw (16).

5. The actuating drive according to one of the claims 1 to 4, **characterized in that** the spring element (26) is configured as a leaf spring which is preferably pre-stressed in a bow-shaped manner.

6. The actuating drive according to one of the claims 1 to 5, **characterized in that** the spring device (11) for applying a force to the actuating member (7) rests against the screw nut (12).

7. The actuating drive according to one of the claims 1 to 6, **characterized in that** the spring device (11) for applying a force to the actuating member (7) includes at least one helical spring.

8. The actuating drive according to one of the claims 1 to 7, **characterized in that** the actuating member (7) is configured as an actuating arm (9) pivotally mounted about a pivoting axis (10).

9. The actuating drive according to claim 8, **characterized in that** the actuating arm (9) can be pivoted via a control curve (20) on which a pressure roller (19) pressurized by the spring device (11) can run along.

10. The actuating drive according to claim 9, **characterized in that** the control curve (20) is formed or arranged on the actuating arm (9), wherein the control curve (20) provides a varying radial spacing in relation to the pivoting axis (10) of the actuating arm (9).

11. The actuating drive according to one of the claims 1 to 10, **characterized in that** an adjustment wheel (14) with a receiving means (15) for a tool is provided, the adjustment wheel (14) interacts via a transmission mechanism with the adjusting screw (16), wherein the adjusting screw (16) can be rotated by a pivoting movement of the adjustment wheel (14) implemented by the tool.

12. The actuating drive according to claim 11, **characterized in that** the adjustment wheel (14) is rotatably mounted about a rotational axis, wherein the direction of the rotational axis of the adjustment wheel (14) extends transversely, preferably approximately at a right angle, relative to a longitudinal axis of the adjusting screw (16).

13. The actuating drive according to one of the claims 1 to 12, **characterized in that** the actuating drive (5) has a housing (6) to be fixed to a furniture carcass (2), wherein the actuating member (7), in the position of use, is pivotally connected on the one hand to the furniture carcass (2) and on the other hand to the movable furniture part (3).

14. An item of furniture (1) with a furniture carcass (2) and a flap (4) movably mounted relative to the furniture carcass (2), wherein the flap (4) can be moved by an actuating drive (5) according to one of the claims 1 to 13.

## Revendications

1. Mécanisme de commande (5) pour déplacer une partie mobile de meuble (3), comprenant :
- au moins un vérin (7) logé de façon mobile pour déplacer la partie de meuble mobile (3),
- un dispositif à ressort (11) pour l'application d'une force au vérin (7),
- un dispositif de réglage (13) par lequel une force, agissant sur le vérin (7), du dispositif à ressort (11) peut être réglée,
- dans lequel le dispositif de réglage (13) présente une vis de réglage (16) présentant un filet (17), dans lequel la force, agissant sur le vérin (7), du dispositif à ressort (11) peut être réglée au moyen d'un écrou (12), lequel est logé de façon déplaçable le long du filet (17),
**caractérisé en ce qu'**au moins un élément à ressort (26) distinct du dispositif à ressort (11) est prévu, par lequel l'écrou (12) peut être sollicité à au moins une zone d'extrémité de la vis de réglage (16) avec une force le repoussant de cette zone d'extrémité et **en ce que** sur au moins une zone d'extrémité de la vis de réglage (16) est disposée une surface de butée (37), sur laquelle peut s'appuyer l'élément à ressort (26).

2. Mécanisme de commande selon la revendication 1, **caractérisé en ce que** la surface de butée (37) est formée d'une tête de vis de la vis de réglage (16).

3. Mécanisme de commande selon la revendication 1 ou 2, **caractérisé en ce que** l'élément à ressort (26) est conçu comme un élément distinct de l'écrou (12).

4. Mécanisme de commande selon l'une des revendications 1 à 3, **caractérisé en ce que** la vis de réglage (16) présente une section sans filet (25) au moins une zone d'extrémité, dans lequel l'écrou (12) peut pénétrer dans cette section sans filet (25) et peut être dégagé du filet (17) de la vis de réglage (16).

5. Mécanisme de commande selon l'une des revendications 1 à 4, **caractérisé en ce que** l'élément à ressort (26) est conçu comme un ressort à lames, de préférence précontraint en arc.

6. Mécanisme de commande selon l'une des revendications 1 à 5, **caractérisé en ce que** le dispositif à ressort (11) pour solliciter le vérin (7) est en appui sur l'écrou (12).

7. Mécanisme de commande selon l'une des revendications 1 à 6, **caractérisé en ce que** le dispositif à ressort (11) pour solliciter le vérin (7) présente au moins un ressort cylindrique.

8. Mécanisme de commande selon l'une des revendications 1 à 7, **caractérisé en ce que** le vérin (7) est conçu comme un bras de réglage (9) logé de façon pivotante autour d'un axe de rotation (10).

9. Mécanisme de commande selon la revendication 8, **caractérisé en ce que** le bras de réglage (9) peut pivoter sur une came de commande (20) sur laquelle se déroule un galet de pression (19) chargé par le dispositif à ressort (11).

10. Mécanisme de commande selon la revendication 9, **caractérisé en ce que** la came de commande (20) est disposée ou conçue sur le bras de réglage (9), dans lequel la came de commande (20) est à un écartement radial variable par rapport à l'axe de rotation (10) du bras de réglage (9).

11. Mécanisme de commande selon l'une des revendications 1 à 10, **caractérisé en ce qu'**une roue de réglage (14) avec un évidement (15) est prévue pour un outil, laquelle interagit par un engrenage avec la vis de réglage (16), dans lequel la vis de réglage (16) peut être tournée par un mouvement de rotation de la roue de réglage (14), provoqué par l'outil.

12. Mécanisme de commande selon la revendication 11, **caractérisé en ce que** la roue de réglage (14) est logée de façon à pouvoir tourner autour d'un axe de rotation, dans lequel le sens de l'axe de rotation de la roue de réglage (14) passe transversalement, de préférence à angle droit, par rapport à un axe longitudinal de la vis de réglage (16).

13. Mécanisme de commande selon l'une des revendications 1 à 12, **caractérisé en ce que** le mécanisme de commande (5) présente un boîtier (6) à fixer à un corps de meuble (2), dans lequel le vérin (7) est relié en position d'utilisation, d'une part, de façon pivotante au corps de meuble (2) et, d'autre part, à la partie mobile de meuble (3).

14. Meuble (1) avec un corps de meuble (2) et un abattant (4) mobile par rapport au corps de meuble (2), dans lequel l'abattant (4) est retenu de façon mobile par un mécanisme de commande (5) selon l'une des revendications 1 à 13.
